# EUROPÄISCHE PATENTANMELDUNG

(11) **EP 1 201 501 A2**
(43) Veröffentlichungstag der Anmeldung: **02.05.2002**
(21) Anmeldenummer: 01710052.0
(22) Anmeldetag: 11.10.2001
(51) Int. Cl.: B60R 1/12

(54) **Rückspiegel für ein Fahrzeug mit Informationsanzeige**

(30) Priorität: 25.10.2000 DE 10052751
(71) Anmelder: SIEMENS AKTIENGESELLSCHAFT, 80333 München (DE)
(72) Erfinder: Mertsching, Rocco, 78089 Unterkirnach (DE); Wolf, Jürgen, 78048 Villingen-Schwenningen (DE)

(57) **Zusammenfassung**

Um einen Rückspiegel für ein Fahrzeug mit einer spiegelnden Fläche derart auszubilden, daß der Rückspiegel dem Fahrer des Fahrzeugs einerseits eine auf einer physikalischen Messung beruhende Tiefeninformation bereitstellen kann und auch in der Lage ist, weitere für den Fahrer wichtige Informationen anzuzeigen, ohne den Fahrer zu einem Blickrichtungswechsel zu veranlassen, wird vorgeschlagen, bei einem Rückspiegel die spiegelnde Fläche (1) zumindest in einem Teilbereich mit einem Display (3) mit einem spiegelnden Hintergrund auszustatten, wobei das Display (3) in der Lage ist, Schriftzeichen und/oder Piktogramme anzuzeigen. Dabei soll die spiegelnde Fläche (1) trotz der eingeblendeten Informationen praktisch vollflächig zur Abbildung von hinter dem Fahrzeug befindlichen Objekten nutzbar bleiben und auch keine Anbauten an den Rückspiegel erfordern.

## Beschreibung

Die Erfindung betrifft einen Rückspiegel für ein Fahrzeug mit einer spiegelnden Fläche. Derartige Vorrichtungen sind durch vielfältige Benutzung hinlänglich bekannt. So sind viele in Gebrauch befindliche Fahrzeuge mit zwei seitlichen Außenspiegeln und einem in der Fahrgastzelle angeordneten Innenspiegel ausgestattet, um den seitlichen und vor allem den rückwärtigen Raum hinter dem Fahrzeug für dessen Fahrer einsehbar zu machen. Ein Nachteil bekannter Rückspiegel besteht darin, daß diese Rückspiegel aus physikalischen Gründen nur eine zweidimensionale Abbildung der Fahrzeugumgebung, nämlich in Höhe und Breite, nicht aber in der Tiefe bereitstellen können. Die Tiefeninformation muß der Fahrer aufgrund seiner Erfahrung schätzen, wobei dieses empirische Vorgehen naturgemäß zu einer hohen Fehlerquote neigt. Ein weiterer Nachteil herkömmlicher Spiegelanordnungen besteht darin, daß der Fahrer in der Zeit, während er in den Rückspiegel blickt, andere optisch angezeigte Informationen in der Regel nicht wahrnehmen kann, weil die Anzeigevorrichtungen für diese Informationen außerhalb des zu den Rückspiegeln gerichteten Blickbereichs liegen.

Es ist nun die Aufgabe der vorliegenden Erfindung, einen Rückspiegel für ein Fahrzeug mit einer spiegelnden Fläche derart auszubilden, daß der Rückspiegel dem Fahrer des Fahrzeugs einerseits eine auf einer physikalischen Messung beruhende Tiefeninformation bereitstellen kann und auch in der Lage ist, weitere für den Fahrer wichtige Informationen anzuzeigen, ohne den Fahrer zu einem Blickrichtungswechsel zu veranlassen.

Die Aufgabe wird durch einen Rückspiegel für ein Fahrzeug mit einer spiegelnden Fläche mit den Merkmalen des ersten Anspruchs gelöst. Die abhängigen Ansprüche betreffen Ausgestaltungen und Weiterbildungen der gefundenen Lösung.

Die gefundene Lösung zeichnet sich insbesondere dadurch aus, daß die spiegelnde Fläche zumindest in einem Teilbereich ein Display mit einem spiegelnden Hintergrund aufweist, wobei das Display in der Lage ist, Schriftzeichen und/oder Piktogramme anzuzeigen. Darüber hinaus ist vorzugsweise ein Entfernungsmeßsystem vorgesehen, das zumindest im Rückraum des Fahrzeugs die Entfernung zwischen dem Fahrzeug und einem in der Umgebung des Fahrzeugs befindlichen Gegenstand quantitativ erfaßt, wobei das Entfernungsmeßsystem die gemessene Entfernung in dem in die spiegelnde Fläche integrierten Display anzeigt.

Anhand von 6 Figuren soll die Erfindung nun noch näher erläutert werden. Dabei zeigen
- Figur 1: eine spiegelnde Fläche eines konventionellen Rückspiegels,
- Figur 2: eine spiegelnde Fläche eines Rückspiegels mit einem integrierten Display,
- Figur 3: den prinzipiellen Aufbau der spiegelnden Fläche mit einem Flüssigkristall-Display,
- Figur 4: den prinzipiellen Aufbau der spiegelnden Fläche mit einem Flüssigkristall-Display in Verbindung mit einer einseitig transparenten und von der anderen Seite sowohl spiegelnden als auch polarisierenden Folie,
- Figur 5: den prinzipiellen Aufbau der spiegelnden Fläche mit einem selbstleuchtenden, transparenten Display und
- Figur 6: eine spiegelnde Fläche mit einem integrierten Flüssigkristall-Display in Verbindung mit einer elektronisch geregelten Abblendfunktion.

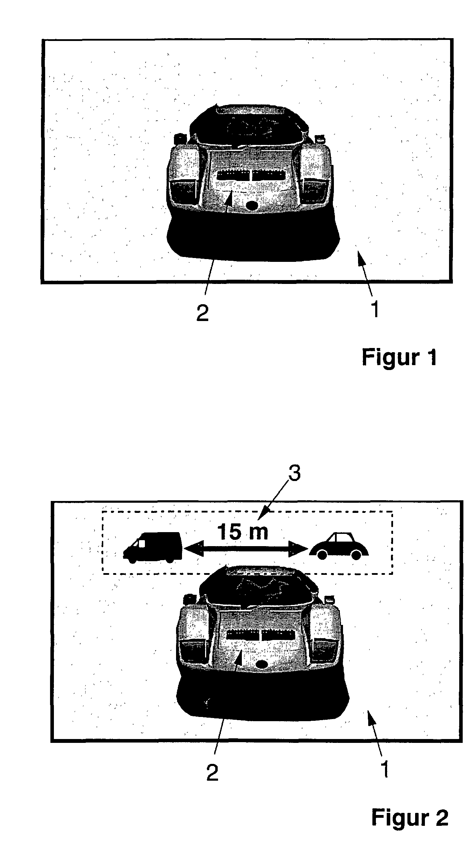

Die **Figur 1** zeigt die spiegelnde Fläche 1 eines konventionellen Rückspiegels mit einer Abbildung 2 eines sich dem Fahrzeug nähernden oder sich im Rückraum des Fahrzeugs befindlichen Objekts. Der Fahrer, der im Rückspiegel seines Fahrzeug diese Abbildung 2 sieht, kann die Distanz zwischen seinem Fahrzeug und dem Objekt nur schätzen. Eine quantitativ genauere Information über die Distanz kann er der Abbildung 2 im Rückspiegel nicht entnehmen. In dieser und der nachfolgenden Darstellung sind das Gehäuse und andere mechanische Komponenten des Rückspiegels nicht dargestellt, weil diese dem Fachmann hinreichend bekannt sind.

Gemäß der **Figur 2** ist in die spiegelnde Fläche 1 ein Display 3 (angedeutet durch die strichpunktierte Umrandung) mit einem der spiegelnden Fläche 1 in den Reflexionseigenschaften und dem Glanzverhalten angepaßten spiegelnden Hintergrund integriert, so daß in die sich dem Fahrer darstellende spiegelnde Fläche 1 bedarfsgerecht eine Information zur Distanz zwischen dem Fahrzeug und dem Objekt eingeblendet werden kann. Diese einblendbare Information kann - wie hier dargestellt - aus einem Piktogramm und einer alphanumerischen Angabe - hier z. B. 15 Meter - bestehen. Die Entfernungsangabe wird von einem mit dem Rückspiegel verbundenen Entfernungsmeßsystem gewonnen, das zumindest im Rückraum des Fahrzeugs die Entfernung zwischen dem Fahrzeug und einem in der Umgebung des Fahrzeugs befindlichen, Fahrzeug fremden Gegenstand quantitativ erfaßt, wobei die vom Entfernungsmeßsystem gemessene Entfernung auf dem Display 3 in der spiegelnden Fläche 1 des Rückspiegels zur Anzeige gebracht wird. Das Entfernungsmeßsystem kann ein mit Radar arbeitendes Entfernungsmeßsystem sein. Die im Display 3 angezeigte Entfernungsangabe kann dem vom Entfernungsmeßsystem aktuell ermittelten Meßergebnis fortlaufend angepaßt werden.

Bei dem Display 3 handelt es sich vorzugsweise um ein im Regelfall eine Beleuchtung erforderndes Flüssigkristall-Display oder ein selbstleuchtendes, transparentes Display. Beide Ausgestaltungen werden nun näher erläutert.

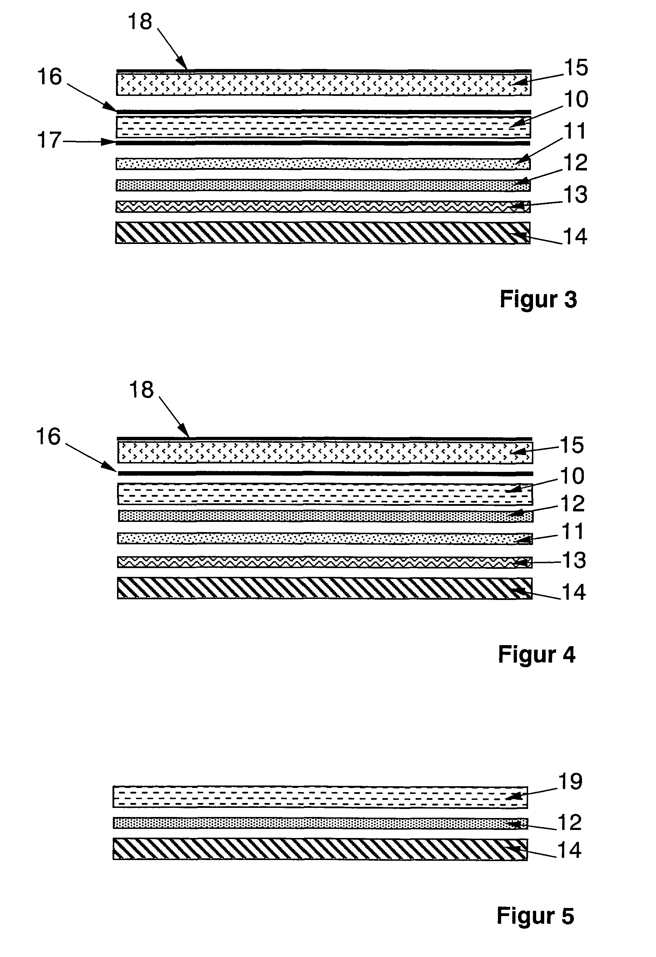

Die **Figur 3** zeigt den prinzipiellen Aufbau der spiegelnden Fläche 1 des vorgeschlagenen Rückspiegels bei Verwendung eines Flüssigkristall-Displays. Die spiegelnde Fläche 1 enthält zumindest in einem Teilbereich ein Flüssigkristall-Display (LCD = liquid crystal display), das aus einer Flüssigkristallzelle 10 besteht, wobei diese Flüssigkristallzelle 10 in bekannter Weise aus einer zwischen zwei Glasscheiben angeordneten, dünnen und elektrisch steuerbaren Flüssigkristallschicht besteht, wobei diese bekannten Einzelheiten einer Flüssigkristallzelle 10 hier in der Figur 3 nicht dargestellt sind, und wobei die Flüssigkristallzelle 10 zwischen einem oberen Polarisator 16 und einem unteren Polarisator 17 angeordnet ist, wobei die Polarisatoren 16 und 17 unmittelbar auf den nach außen gewandten Seiten des Glasscheibenpaketes aufgebracht sind. Diesem Flüssigkristall-Display ist vollflächig eine dünne spiegelnde Folie 12 unterlegt, wobei diese Folie 12 auf der dem Flüssigkristall-Display zugewandten Seite praktisch lichtundurchlässig ist und auf dieser Seite hervorragende spiegelnde Eigenschaften besitzt, um möglichst vollwertig die Funktion eines konventionellen Spiegels zu übernehmen. Auf der vom Flüssigkristall-Display abgewandten Seite ist die Folie 12 weitgehend lichtdurchlässig und von einer vorzugsweise flächigen Displayhinterleuchtung 13 unterlegt. Die Displayhinterleuchtung 13 kann aus einer Elektrolumineszens-Folie oder einer als Folie oder Platte ausgebildeten organischen Leuchtdiode bestehen. Die Displayhinterleuchtung 13 dient, wenn die Anwendung oder die Betriebsbedingungen des Rückspiegels es erfordern, zur gegebenenfalls farbigen Beleuchtung des Flüssigkristall-Displays und wird ebenso wie das Flüssigkristall-Display von einer Steuerelektronik 14 bedarfsgerecht angesteuert oder auch in seiner Helligkeit geregelt. Eine dem Flüssigkristall-Display unterlegte flächige, transparente Display-Heizung 11 ist bei tiefen Umgebungstemperaturen zur Erwärmung des Flüssigkristall-Displays erforderlich, um einen ausreichenden Kontrast der Anzeige sicher zu stellen. Für die Display-Heizung 11 eignen sich dünne Indiumoxid-Schichten, die auf einer separaten Glasscheibe aufgetragen oder in das Glasscheibenpaket des Flüssigkristall-Displays integriert werden. Auch die Ansteuerschaltung für den Betrieb der Display-Heizung 11 ist vorzugsweise in Verbindung mit der Steuerelektronik 14 realisiert. Ein Deckglas 15 schützt den ihm nachgeordneten Aufbau vor mechanischen Einflüssen. Es ist von Vorteil, das Deckglas 15 zumindest auf der dem Umgebungslicht zugewandten Seite zu entspiegeln, beispielsweise durch den Auftrag einer entspiegelnden Beschichtung 18 oder Struktur.

Es ergibt sich ein besonders günstiger Aufbau für den vorgeschlagenen Rückspiegel, wenn die spiegelnde Folie 12 die Funktion des unteren Polarisators 17 übernehmen kann, weil sie neben den bereits genannten Eigenschaften auch für Licht polarisierend wirkt. Einen solchen vereinfachten und damit besonders kostengünstigen Aufbau zeigt die **Figur 4.** Dieser Aufbau hat den Vorteil, daß die durch den Polarisator 17 bedingte Lichtabsorption entfällt, so daß das von der Displayhinterleuchtung 13 bereitgestellte Licht besser genutzt werden kann. Der Helligkeitsgewinn durch den Wegfall des Polarisators 17 wurde beispielsweise mit 15 % festgestellt. Sofern die ursprüngliche Helligkeit ausreichend ist, kann auch die in die Displayhinterleuchtung 13 eingespeiste Lichtstärke reduziert werden, was zu Kostenersparnissen bei der Lichtquelle und deren Ansteuerung führt.

Wenn zur Integration eines Displays 3 in die spiegelnde Fläche 1 des Rückspiegels anstelle des passiven, d. h. eine Beleuchtung erfordernden Flüssigkristall-Displays ein aktives, d. h. ein selbstleuchtendes, transparentes Display 19, z. B ein Elektrolumineszenz-Display verwendet wird, stellt sich der prinzipielle Aufbau der spiegelnden Fläche 1 wie in der **Figur 5** gezeigt dar. Bei einer Ausgestaltung des selbstleuchtenden, transparenten Displays 19 als Elektrolumineszenz-Display, das aus einer Elektrolumineszenzschicht, Elektrodenschichten und Isolatorenschichten besteht, kann auch dieses Display 19 mit einer dünnen spiegelnden Folie 12 - wie zuvor in der Figur 3 beschrieben - hinterlegt werden. Statt der spiegelnden Folie 12 können in diesem Fall aber auch andere spiegelnde Materialien verwendet werden, weil bei Verwendung eines selbstleuchtenden, transparenten Displays 19 die einseitige Durchlichtfähigkeit der spiegelnden Schicht für Beleuchtungszwecke nicht erforderlich ist, da dieses Display 19 selbst leuchtfähig ist. Jedoch führt eine Hinterlegung dieses Displays 19 beispielsweise mit einem konventionellen Spiegel zu einer größeren, meist unerwünschten Bautiefe. Wie in der in Figur 3 dargestellten Ausgestaltung soll auch in diesem Fall die zur Ansteuerung des Displays 19 erforderliche Steuerelektronik 14 im Gehäuse des Rückspiegels untergebracht sein.

Unabhängig davon, welche Bauform für das Display 3 verwendet wird, ist es von Vorteil, wenn die Steuerelektronik 14 jeweils alle zum Betrieb des Displays 3 erforderlichen elektronischen Komponenten enthält, einschließlich einer an das elektrische Bordnetz des Fahrzeugs anschließbaren Stromversorgungseinheit. Die Steuerelektronik 14 umfaßt neben den Treibereinheiten für die Flüssigkristallzelle 10 oder das selbstleuchtende, transparente Display 19 und gegebenenfalls der Ansteuerung für eine Display-Heizung 11 auch eine programmierbare Datenverarbeitungseinheit samt einer ihr zugeordneten Speichereinheit, um der Datenverarbeitungseinheit über ein Übertragungsmedium, was ein im Fahrzeug angeordnetes Datenbussystem sein kann, in Verbindung mit einer Datenschnittstelle zugehende Daten auf dem Display 3 zur Anzeige zu bringen. Dabei können die auf dem Display 3 anzuzeigenden Daten von einem als selbständiges Steuergerät ausgestalteten Entfernungsmeßsystem oder einer ein Meßsignal noch nicht auswertenden Sensoreinheit stammen und über das Übertragungsmedium an die Datenverarbeitungseinheit geleitet werden. Außer der Anzeige von einer gemessenen Entfernung zu einem in der Umgebung des Fahrzeugs befindlichen Gegenstand können über das Übertragungsmedium auch andere für den Fahrer wichtige Informationen in Form von Piktogrammen oder Schriftzeichen in die spiegelnde Fläche 1 des vorgeschlagenen Rückspiegels eingeblendet werden. Die der Datenverarbeitungseinheit zugeordnete Speichereinheit ist ein nichtflüchtiges Speichermedium, das gerätespezifische Parameter wie z. B. Stützwerte der Displayhelligkeit, aber auch displayrelevante Daten wie Piktogramme, Zeichensätze und ähnliches enthalten kann. Die Datenverarbeitungseinheit bereitet somit die auf dem Display 3 anzuzeigende Information auf, wobei die die Ausgangssignale der Datenverarbeitungseinheit entgegen nehmenden Treibereinheiten die eigentlichen Funktionen und Anzeigen des Displays 3 steuern.

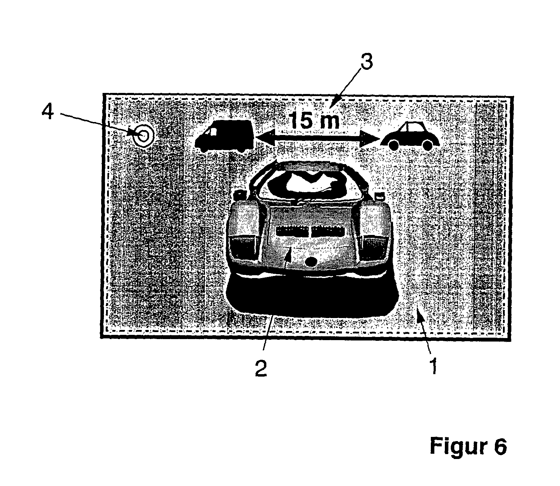

Wenn für das Display 3 ein pixelorientiertes Flüssigkristall-Display verwendet wird, läßt sich - wie in der **Figur 6** angezeigt - ein Abblenden der spiegelnden Fläche 1 realisieren. Bei starkem Lichteinfall auf die spiegelnde Fläche 1 des Rückspiegels z. B. bei Nachtfahrten durch das Scheinwerferlicht eines nachfolgenden Fahrzeugs kann der Fahrer bislang einer durch Reflexionen hervorgerufenen Blendwirkung nur durch eine mechanische Verstellung des Rückspiegels ausweichen. Ein pixelorientiertes Flüssigkristall-Display ist hingegen durch die im Rückspiegel angeordnete Datenverarbeitungseinheit in Verbindung mit mindestens einem in der spiegelnden Fläche 1 angeordneten lichtempfindlichen Sensor 4 dahingehend regelbar, daß die der Flüssigkristallzelle 10 hinterlegte spiegelnde Folie 12 bedarfsgerecht je nach Intensität des einfallenden Lichts durch Aktivierung der Pixel des Displays abgedunkelt werden kann, wodurch dem Fahrer die spiegelnde Fläche 1 kontrastreicher und damit blendfreier erscheint. Diese Abblendfunktion wird dadurch verwirklicht, daß - gesteuert von der Datenverarbeitungseinheit - z. B. ein Karomuster oder ein anderes passendes Pixelmuster auf dem Display 3 angezeigt und so die spiegelnde Wirkung der dem Display 3 unterlegten spiegelnden Folie 12 abschwächt wird. Bei Realisierung dieser Funktion wird man vorzugsweise die gesamte spiegelnde Fläche 1 des Rückspiegels mit einem Flüssigkristall-Display unterlegen, wie es die strichpunktierte Umrandung in der Figur 6 andeutet.

Ein Vorteil für den vorgeschlagenen Rückspiegel besteht darin, daß trotz der eingeblendeten Informationen die spiegelnde Fläche 1 praktisch vollflächig zur Abbildung von hinter dem Fahrzeug befindlichen Objekten nutzbar bleibt und für die Anzeigefunktion auch keine Anbauten an den Rückspiegel erforderlich werden.

Das Display 3 besitzt insbesondere durch den Einsatz der beschriebenen Folie 12, die vorzugsweise ein Filmmaterial von nur wenigen hundert Mikrometern Dicke ist, einen spiegelnden Hintergrund mit einer vorzugsweise silbrigen bzw. metallischen Anmutung und verfügt über hochreflektive Eigenschaften sowie einen kontrastreichen Glanz und die Fähigkeit, eine Abbildung optisch scharf wiederzugeben, so daß sich dieses Display 3 harmonisch in die bekannte spiegelnde Fläche 1 eines Rückspiegels einfügt, ohne als Anzeigevorrichtung hervorzutreten, solange keine Anzeige erfolgt. Außer der vorzugsweise silbrigen bzw. metallischen Anmutung des spiegelnden Hintergrunds des Displays 3 sind aber durch eine entsprechende Ausgestaltung der Folie 12 selbst oder durch die gewählte Displayhinterleuchtung 13 auch andere Farbdarstellungen möglich.

Durch die flache Bauweise insbesondere eines als Elektrolumineszenz-Display ausgestalteten Displays 3 können selbst Innenspiegel in einem Fahrzeug, die üblicherweise nur eine geringe Bautiefe aufweisen, mit der erfindungsgemäßen Anzeigevorrichtung ausgestattet werden.

Durch eine Ausgestaltung des Rückspiegels als datenbusfähiges Gerät können in Abhängigkeit von der Programmierung der Datenverarbeitungseinheit in der Steuerelektronik 14 Informationen von beliebigen Steuergeräten im Fahrzeug zur Anzeige gebracht werden. So ist es auch möglich, insbesondere bei Schneefall oder dichtem Nebel die Aufnahmen einer am Fahrzeug angebrachten Infrarot-Kamera im Display 3 zur Anzeige zu bringen oder zumindest geeignete Piktogramme einzublenden, die den Fahrer auf eine Gefahrensituation hinweisen, wenn von der im Rückspiegel angeordneten Datenverarbeitungseinheit in Verbindung mit von Sensoren erfaßten Meßwerten bestimmte Grenzwertüberschreitungen erkannt werden.

Weil für die Wahrnehmung optimal positionierte Anzeigeflächen im Fahrzeug sehr begrenzt sind, jedoch die einem Fahrer anzuzeigenden Informationen immer mehr zunehmen, bedeutet die vorgeschlagene Integration eines Displays 3 in einen Rückspiegel einen beachtlichen Gewinn an den Möglichkeiten, wie einem Fahrer zu einem Zeitpunkt, zu dem er eine bestimmte Information benötigt, diese auch dargeboten werden kann, ohne seine Aufmerksamkeit von seiner eigentlichen Fahraufgabe durch einen Blickrichtungswechsel abzulenken.

Darüber hinaus ist es bei einem pixelorientierten Flüssigkristall-Display mit geringem Aufwand möglich, bei störenden Fremdlichtreflexionen eine selbsttätig regelnde Abblendfunktion als Zusatznutzen zu verwirklichen.

## Patentansprüche

1. Rückspiegel für ein Fahrzeug mit einer spiegelnden Fläche (1),
**dadurch gekennzeichnet,**
**daß** die spiegelnde Fläche (1) zumindest in einem Teilbereich ein Display (3) mit einem spiegelnden Hintergrund aufweist, wobei das Display (3) in der Lage ist, Schriftzeichen oder Piktogramme anzuzeigen.

2. Rückspiegel nach Anspruch 1,
**dadurch gekennzeichnet,**
**daß** ein Entfernungsmeßsystem vorgesehen ist, das zumindest im Rückraum des Fahrzeugs die Entfernung zwischen dem Fahrzeug und einem in der Umgebung des Fahrzeugs befindlichen Gegenstand quantitativ erfaßt, wobei das Entfernungsmeßsystem die gemessene Entfernung in dem in die spiegelnde Fläche (1) integrierten Display (3) anzeigt.

3. Rückspiegel nach einem der vorangegangenen Ansprüche,
**dadurch gekennzeichnet,**
**daß** das Display (3) als ein Flüssigkristall-Display ausgebildet ist, wobei das Flüssigkristall-Display von einer spiegelnden Folie (12) unterlegt ist, die auf der dem Flüssigkristall-Display zugewandten Seite spiegelnde Eigenschaften besitzt und dort praktisch lichtundurchlässig ist, wohingegen die Folie (12) von der dem Flüssigkristall-Display abgewandten Seite zur Beleuchtung des Flüssigkristall-Displays Licht durchläßt.

4. Rückspiegel nach Anspruch 3,
**dadurch gekennzeichnet,**
**daß** die spiegelnde Folie (12) für Licht polarisierend wirkt.

5. Rückspiegel nach einem der vorangegangenen Ansprüche,
**dadurch gekennzeichnet,**
**daß** das Display (3) als ein transparentes, selbstleuchtendes Display ausgebildet ist.

6. Rückspiegel nach einem der vorangegangenen Ansprüche,
**dadurch gekennzeichnet,**
**daß** alle zum Betrieb des Displays (3) erforderlichen elektronischen Komponenten in einer Steuerelektronik (14) im Gehäuse des Rückspiegels angeordnet sind, wobei die Steuerelektronik (14) eine programmierbare Datenverarbeitungseinheit einschließt sowie eine Datenschnittstelle zum Anschluß der Datenverarbeitungseinheit an ein im Fahrzeug angeordnetes Datenbussystem.

7. Rückspiegel nach einem der vorangegangenen Ansprüche,
**dadurch gekennzeichnet,**
**daß** das Display (3) als ein pixelorientiertes Flüssigkristall-Display ausgebildet ist, das durch die im Rückspiegel angeordnete Datenverarbeitungseinheit in Verbindung mit mindestens einem in der spiegelnden Fläche (1) angeordneten lichtempfindlichen Sensor (4) dahingehend regelbar ist, daß die dem Flüssigkristall-Display unterlegte spiegelnde Folie (12) bei störenden Fremdlichtreflexionen durch Aktivierung der Pixel des Flüssigkristall-Displays abgedunkelt werden kann.
